# EUROPÄISCHE PATENTSCHRIFT

(11) **EP 2 271 452 B1**
(45) Veröffentlichungstag und Bekanntmachung des Hinweises auf die Patenterteilung: **15.08.2012**
(21) Anmeldenummer: 09721922.4
(22) Anmeldetag: 17.03.2009
(51) Int. Cl.: B23C 5/22

(54) **FRÄSWERKZEUG ZUM SPANABHEBENDEN BEARBEITEN VON WERKSTÜCKEN**
MILLING TOOL FOR MACHINING WORK PIECES
OUTIL DE FRAISAGE POUR L'USINAGE DE PIÈCES PAR ENLÈVEMENT DE COPEAUX

(30) Priorität: 18.03.2008 DE 202008000026 U; 05.11.2008 DE 202008013759 U
(43) Veröffentlichungstag der Anmeldung: 12.01.2011
(73) Patentinhaber: Pokolm, Franz-Josef, 33428 Harsewinkel (DE)
(72) Erfinder: Pokolm, Franz-Josef, 33428 Harsewinkel (DE)
(74) Vertreter: Flötotto, Hubert
(86) Internationale Anmeldenummer: PCT/EP2009/053153
(87) Internationale Veröffentlichungsnummer: WO 2009/115526

(56) Entgegenhaltungen:
- EP-A- 1 561 532
- AU-B2- 450 099
- US-A- 1 838 520
- US-A- 2 885 766

## Beschreibung

### Technisches Gebiet

Die Erfindung betrifft ein Fräswerkzeug zum spanabhebenden Bearbeiten von Werkstücken mit wenigstens einer am Fräskopf angeordneten Schneide in Form einer Wendeschneidplatte, die auf einer radial rotationssymmetrisch ausgebildeten Y-Achse am Fräskopf drehbar gelagert ist, und wobei die Wendeschneidplatte (2) drehbar an einem am Fräskopf (3) eingefassten Lagerstift (9) angeordnet ist.

### Stand der Technik

Fräsen mit rotierenden Schneiden ist ein seit Jahren bekanntes Verfahren, welches sich aber nur im geringen Umfang in der Fertigung durchgesetzt hat. In diesem Fall kommt ein Werkzeug zum Einsatz, dessen aktives Element aus einer runden, drehbar gelagerten Schneidscheibe besteht, die während des Bearbeitungsvorganges eine durch den Spanungsprozess und die Schrägstellung der Schneidscheibenachse zur Schnittrichtung kinematisch bedingte selbsttätige Rotationsbewegung ausführt. Durch diese rotierende Bewegung der Schneidscheibe während der Bearbeitung gelangt in kontinuierlicher Folge ständig eine neue Stelle der Schneide in Eingriff, wodurch jeder Schneidenpunkt nur kurzzeitig in der Schneidzone verweilt, was eine geringe Erwärmung der Schneidscheibe mit sich bringt.

Ein entsprechender Fräser ist hier beispielsweise aus der DD 118 543 bekannt. Bei dieser Ausführungsform wird am Fräskopf neben einer rotierenden Drehscheibe auch eine feststehende Schneide vorgesehen, um auf diese Weise ein besonderes Schnittbild zu erzielen. Eine weitere Ausführungsform des Standes der Technik ist ebenfalls aus der US 2,885,766 bekannt, bei der im Fräskopf drehbar gelagerte Wendeschneidplatten vorgesehen sind, die auf rotationssymmetrisch ausgebildeten Achsen am Fräskopf drehbar gelagert sind. Die drehbar gelagerten Wendeschneidplatten befinden sich bei diesem aus dem Stand der Technik bekannten Fräskopf in U-förmig ausgebildeten Nestern, so dass insbesondere eine beidseitige Einbindung der Achsen im Fräskopf gegeben ist. Der Oberbegriff von Anspruch 1 basiert auf diesem Dokument US 2,885,766.

Zudem sind weitere Ausführungsformen bekannt, wie diese beispielsweise in der US 5,478,175 beschrieben werden. In dieser Druckschrift ist eine drehbare Schneide offenbart, die an ihrer Rückseite über einen angeformten Schaft verfügt, der im Trägermaterial des Fräskopfes in einer Sacklochbohrung drehbar gelagert ist. Eine äquivalente Lösung ist auch aus der DE 10 2005 051 695 bekannt, bei der insbesondere die Wendeschneidplatte an einem Trägerelement befestigt ist und wobei das Trägerelement drehbar in dem Werkzeug gehaltert ist. Dabei weist das Trägerelement koaxial zur Y-Achse einen Wellenstummel auf, der in einer Sacklochbohrung im Werkzeug drehbar geführt ist. Bei dieser nach dem Stand der Technik bekannten Ausführungsform kann auch vorgesehen werden, dass insbesondere das Trägerelement hierbei aktiv drehangetrieben ausgebildet sein kann, so dass infolge der Drehbewegung des Fräswerkzeuges, hier über ein im Fräskopf vorgesehenes Getriebe, die auf dem Träger befestigte Schneidplatte mit angetrieben wird. Eine entsprechende Ausführungsform wird auch in der CH 480 120 beschrieben. Hierbei offenbart die US 2,885,766 dem Fachmann einen Planfräser, dessen Einsatz zum Glätten von Flächen bzw. zum Befreien von Unebenheiten auf Flächen begrenzt ist. Der beschriebene Planfräser umfasst hierbei einen als Ring ausgebildeten Träger an dessen Umfang Schneidplatten verteilt angeordnet sind. Die einzelne Schneidplatte ist hierbei mittels eines Achszapfens bzw. eines Lagerzapfens an dem Ring drehbar gelagert. Der Achszapfen bzw. der Lagerzapfen ist in zwei gegenüberliegend koaxial angeordneten Bohrungen drehbar gelagert. Die Schneidplatten sind unter einer Winkelstellung an dem Trägerring eingefasst, so dass sie unter dieser Winkelstellung eine bevorzugte Planfräsung unter einer geringen Schneidtiefe auf einer Fläche vornehmen können. Der Achszapfen bzw. der Lagerzapfen ist hierbei derart an dem Träger eingefasst, das eine Madenschraube, die im Trägerring angeordnet ist, in eine am Lagerzapfen vorhandene umlaufende Nut greift, um so den drehgelagerten Lagerzapfen an den Lagerbuchsen zu sichern. Zudem sind Schmiermittelkanäle zur Verringerung der Reibung des Lagerzapfens in den Buchsen oder Bohrungen vorhanden, was dem Fachmann die Lehre vermittelt, dass die einzelne Schneidplatte auf dem Lagerzapfen unter einem Spannsitz angebracht ist, wobei die Rotation der Schneidplatte an dem Trägerring ausschließlich durch die Lagerung des Lagerzapfens bzw. des Lagerbolzens an den gegenüberliegenden Bohrungen erfolgt.

Bei diesen aus dem Stand der Technik bekannten Lösungen von Fräswerkzeugen, die mit drehbar gelagerten Schneidscheiben ausgerüstet sind, wird es als nachteilig angesehen, dass die bekannten Ausführungsformen hinsichtlich ihrer drehbar gelagerten Wendeschneidplatten sehr aufwendig bauen, was durch die aufwendig gestaltete Lagerung für die Wendeschneidplatte bedingt ist. So ist beispielsweise allen im Stand der Technik bekannten Lösungen eigen, dass insbesondere die zwar drehbar gelagerte Wendeschneidplatte dadurch gewechselt werden kann, dass mehrere Eingriffe am Fräskopf vorgenommen werden müssen, um die Wendeschneidplatte einerseits aus dem Fräskopf heraus zu lösen bzw. die Wendeschneidplatte nach Lösen des Trägermittels noch vom Trägermittel selbst zu Lösen ist. Als weiterer Nachteil wird es bei den bekannten Lösungen angesehen, dass insbesondere für die Vorhaltung von drehbar gelagerten Wendeschneidplatten, Wendeschneidplatten vorgehalten werden müssen, die insbesondere dem Fräskopf angepasst sind, wobei die bekannten Drehlagerungen von Schneidplatten am Fräskopf nicht die Kombination von Planfräsen und Bohren zulassen, was im Besonderen beim Konturfräsen erforderlich ist.

### Darstellung der Erfindung

**Aufgabe**

Der Erfindung stellt sich somit das Problem, einen Fräskopf zum spanabhebenden Bearbeiten von Werkstücken mit radial angeordneten drehbar gelagerten Wendeschneidplatten derart weiterzubilden, dessen Einbindung zur Lagerung der Schneiden wesentlich einfacher ausfällt, wobei insbesondere der Wechselvorgang der Schneidplatten sich wesentlich einfacher gestaltet, und wobei auch gewährleistet sein soll, dass mit dem Fräskopf neben dem Planfräsen auch ein bohren aus dem vollen Material möglich ist.

**Lösung**

Erfindungsgemäß wird das Problem mit den Merkmalen des Anspruchs 1 gelöst, vorteilhafte Ausgestaltungen der Erfindung ergeben sich aus den Unteransprüchen.

Die mit der Erfindung erreichten Vorteile bestehen im Besonderen darin, das infolge einer Stiftlösung in Verbindung mit der Einfassung der rotierenden Wendeschneidplatte durch das Trägermaterial des Fräskopfes eine in einem Käfig rotierende Wendeschneidplatte geschaffen wird, die die hinreichende Bewegungs- bzw. Drehfreiheit aufweist, um einerseits während des Bohrvorganges in das Material einzudringen und die andererseits beim Fräsen einen entsprechenden Span abheben kann. Die einfache Einbindung der Wendeschneidplatte wird hierbei nur durch die Formgebung des Fräserkopfes in Verbindung mit dem Lagerstift geschaffen. Somit wird gewährleistet, dass die rotierende Scheibe insbesondere beim Spanabheben die hinreichende Rotierungsfreiheit hat, ohne dass die Gefahr besteht, dass die Schneiden sich selbsttätig von ihrer Lagerung abheben können.

Dabei ist die Wendeschneidplatte unter einem Toleranzspiel frei drehbar an dem
freien Ende eines am Fräskopf unter Spannsitz lösbar befestigten Lagerstiftes angeordnet und wobei die frei drehbar gelagerte Wendeschneidplatte gegen ein Selbstlösen vom Lagerstift von dem Material des Fräskopfes einerseits von der Rückseite her flächig und andererseits von der Vorderseite bereichsweise eingefasst bzw. eingebunden ist. Infolge des lösbar befestigten Lagerstiftes, der die Drehachse für die Wendeschneidplatte bildet, wird gewährleistet, dass durch einfaches Lösen des Lagerstiftes die Wendeschneidplatte in ihrem Käfig freigegeben wird, so dass ein einfaches Entnehmen bzw. ein Herausfallen der Wendeschneidplatte aus ihrem Nest gegeben ist. Hierzu ist der Lagerstift in einer am Fräskopf durchschlägigen Bohrung angeordnet. Es versteht sich nun von selbst, dass der Lagerstift von einer Seite her leicht durchgedrückt werden kann, so dass er insbesondere die Wendeschneidplatte in ihrem Sitz freigibt und sie aus dem Netz herausgenommen werden kann.

Gemäβ der Erfindung weist der Lagerstift einen vorderen zylindrischen Bereich zur Drehlagerung der Wendeschneidplatte und einen hinteren konisch gelagerten Bereich zur Festlegung am Trägermaterial des Fräskopfes auf. Somit wird gewährleistet, dass einerseits der Stift, der eine starre Lagerachse als freies Ende bildet, durch Adhäsionskräfte im Material des Fräserkopfes gehalten wird. Andererseits bildet insbesondere der vordere zylindrische Bereich des Lagerstiftes eine Art Gleitlagerfläche für die Wendeschneidplatte.

In Weiterbildung der Erfindung kann der Lagerstift im hinteren konisch ausgebildeten Bereich eine zentrale Gewindebohrung aufweisen. Diese Gewindebohrung kann auch insbesondere dazu verwendet werden, um beispielsweise hier den Lagerstift in der durchschlägigen Bohrung zu Verspannen bzw. aber auch, um beispielsweise ein Werkzeug anzusetzen, um mit diesem Werkzeug den Lagerstift aus dem Sitz herauszuschlagen. In Weiterbildung der Erfindung wirkt der Lagerstift im hinteren konisch ausgebildeten Bereich mit einer in der Bohrung vorgesehenen Konizität zusammen. Somit wird ein formschlüssiger Passsitz im Trägermaterial des Fräskopfes bereitgestellt.

Nach einer besonders vorteilhaften Ausgestaltung der Erfindung kann auch vorgesehen sein, dass der Lagerstift als eine Schraube ausgebildet sein kann, dessen vorderer Bereich des Schaftes zur Bildung der Lagerung der Wendeschneidplatte zylindrisch ausgebildet ist und wobei der zylindrische Bereich in die Bohrung greift und dort abgestützt ist. Hierbei reicht der zylindrische Bereich des Schraubenschaftes in das Fräskopfmaterial hinein und wird gegen einen Anschlag spannend verschraubt, so dass die als Lagerstift ausgebildete Schraube im Fräskopfmaterial eine starre Lagerachse bildet. Der vordere Schaftbereich der Schraube bildet somit in gleicher Weise, wie beschrieben, eine zylindrische Gleitlagerachse.

Hierbei kann die zentrale Bohrung zur Drehlagerung der Wendeschneidplatte eine Sacklochbohrung sein. Somit wird gewährleistet, dass sich die Wendeschneidplatte im vorderen Bereich geschlossen darstellt, so dass dadurch die Lagerungshalterung komplett von der Wendeschneidplatte umgeben ist. Um insbesondere das Lösen des Lagerstiftes hier zu vereinfachen, kann auch vorgesehen sein, dass die Wendeschneidplatte zur Drehlagerung eine zylindrische Sacklochbohrung mit einer zentralen Öffnung aufweist, durch die ein Werkzeug zum Herausdrücken des Lagerungsstiftes angesetzt werden kann.

In Weiterbildung der Wendeschneidplatten können diese an ihrer Frontseite eine Spanmulde aufweisen. Die Spanmulden können hierbei sowohl auf der Front- als auch auf der Rückseite vorgesehen sein. Zur Begünstigung der kinematisch bedingten selbsttätigen Rotationsbewegung der Wendeschneidplatten wird vorgesehen, dass die rotationssymmetrisch ausgebildete Y-Achse am Fräskopf unter einer Schrägen verläuft. Hierbei kann die Schräge entweder eine geringe positive Neigung oder eine geringe negative Neigung zur X-Achse aufweisen.

Nach einer besonders vorteilhaften Ausgestaltung der Erfindung, kann statt des einfassenden Fräsermaterials die Wendeschneidplatte von ihrer Fronseite her mit einem Halteelement zusammenwirken. Dabei ist die frei drehbar gelagerte Wendeschneidplatte gegen ein Selbstlösen vom Lagerstift von dem Material des Fräskopfes von der Rückseite her flächig und andererseits von der Vorderseite her mittels eines am Fräskopf vorgesehenen Halteelementes eingefasst. Das Halteelement umfasst eine Schraube, dessen Schraubenkopf eine frontseitige Anlage für die drehbar gelagerte Wendeschneidplatte bildet.

Nach einer vorteilhaften Weiterbildung der Erfindung wird infolge einer Stiftlösung in Verbindung mit der Einfassung der rotierenden Wendeschneidplatte durch das Trägermaterial des Fräskopfes eine rotierende Wendeschneidplatte geschaffen, die die hinreichende Bewegungs- bzw. Drehfreiheit aufweist, um einerseits während des Bohrvorganges in das Material einzudringen und die andererseits beim Fräsen einen entsprechenden Span abheben kann. Die einfache Einbindung der Wendeschneidplatte wird hierbei nur durch die Formgebung des Fräserkopfes in Verbindung mit dem Lagerstift geschaffen. Somit wird gewährleistet, dass die rotierende Scheibe, insbesondere beim Spanabheben, die hinreichende Rotierungsfreiheit hat, ohne dass die Gefahr besteht, dass die Schneiden sich selbsttätig von ihrer Lagerung abheben können.

Dabei ist die Wendeschneidplatte unter einem Toleranzspiel frei drehbar an dem freien Ende eines am Fräskopf unter Spannsitz lösbar befestigten Lagerstiftes angeordnet und wobei die frei drehbar gelagerte Wendeschneidplatte gegen ein Selbstlösen vom Lagerstift durch Formschluss zwischen dem freien Ende des Lagerstiftes sowie dem Lagersitz der Wendeschneidplatte gesichert ist. Diese Ausbildung gewährleistet, eine frei drehbare Wendeschneidplatte, die ausschließlich durch den Formschluss an dem Lagerstift gehalten wird. Der Formschluss zwischen dem freien Ende des Lagerstiftes sowie dem Lager selbst der Wendeschneidplatte ist dabei konisch ausgebildet. Auf Grund dieser Ausbildung ist die Anbringung bzw. das Einsetzen der Wendeschneidplatte äußerst einfach. Wird der Lagerstift herausgedreht, kann die Wendeschneidplatte vom Lagerstift entfernt werden. Die Formschlusslagerung erstreckt sich hierbei derart, dass die konische Formschlussverbindung sich vorzugsweise etwa über die Hälfte des freien Endes des Lagerstiftes bzw. des Lagersitzes der Wendeschneidplatte erstreckt.

Gemäß einer zweckmäßigen Ausbildung weist hierbei das freie Ende des Lagerstiftes einen zylindrischen Bereich zur Drehlagerung der Wendeschneidplatte auf, an den sich ein weiterer, konisch ausgebildeter Bereich zur Festlegung sowie zur Zentrierung im Trägermaterial des Fräskopfes anschließt. Dadurch wird gewährleistet, dass immer ein zentrierter Sitz des Lagerstiftes im Fräskopfmaterial gegeben ist. In Weiterbildung der Erfindung ist der Lagerstift im hinteren Bereich als eine Schraube zur spannenden Festlegung im Trägermaterial des Fräskopfes ausgebildet. Die Wendeschneidplatte selbst weist zur Drehlagerung eine konische Bohrung auf, an die sich ein zylindrischer Bereich anschließt. Der konische sowie der zylindrische Bereich sind mit der Konizität sowie dem zylindrischen Bereich des Lagerstiftes abgestimmt. Nach einer vorteilhaften Weiterbildung der Erfindung weist die Wendeschneidplatte an ihrer Vorderseite eine Spanmulde auf.

Gemäß einer besonders vorteilhaften Weiterbildung der Erfindung kann zur zusätzlichen Käfigbildung für die rotierende Wendeschneidplatte, die einerseits von dem Material des Fräskopfes von der Rückseite her umgeben ist, der Käfig andererseits durch eine von der Vorderseite her mittels eines am Fräskopf vorgesehenen Halteelementes vervollständigt werden. Dabei umfasst das Halteelement eine Platte, die mittels eines Befestigungsmittels, vorzugsweise einer Schraube, am Fräskopf befestigt ist, wobei ein Bereich der Platte über die Vorderseite der Wendeschneidplatte hinausragt. In Weiterbildung ist dabei in vorteilhafter Weise die Platte vorzugsweise in eine im Fräskopf vorgesehene Ausformung eingelegt bzw. angeordnet. Dadurch ergibt sich insbesondere eine formstabile Lage des den Käfig bildenden Halteelementes.

### Kurze Beschreibung der Zeichnungen

Ein Ausführungsbeispiel der Erfindung wird anhand der nachstehenden Figuren 1 bis 15 näher dargestellt; dabei zeigen:

Figur 1 eine erste Ausführungsform eines Fräswerkzeugs gemäß der Erfindung, wobei der Fräser in einer Seitenansicht a, einer perspektivischen Ansicht b, einer Draufsicht c, einer geschnittenen Seitenansicht d, sowie einer Detailansicht e dargestellt ist;

Figur 2 eine weitere Ausführungsform gemäß der Figur 1 in ähnlicher Weise, ebenfalls in Detailansichten a bis e;

Figur 3 eine weitere Ausführungsform gemäß der Figur 1 ebenfalls in Detailansichten a bis e;

Figur 4 eine weitere Ausführungsform gemäß der Figur 1 ebenfalls in den Detailansichten a bis e;

Figur 5 eine weitere Ausführung gemäß der Figur 1 ebenfalls in den Detailansichten a bis e mit einem als Schraube ausgebildeten Lagerstift;

Figur 6 zeigt ein Fräswerkzeug gemäß der Erfindung mit einer Negativneigung der Stiftachse, ebenfalls in den Detailansichten a bis e;

Figur 7 eine weitere Ausführungsform gemäß der Figur 6, ebenfalls in den Detailansichten a bis e mit einer Positivneigung der Stiftachse;

Figur 8 eine Einzeldarstellung des Lagerstiftes ebenfalls in Detailansichten a bis d;

Figur 9 eine weitere Ausführungsform gemäß der Figur 1 ebenfalls in den Detailansichten a bis e;

Figur 10 eine weitere Ausführungsform eines Fräswerkzeugs gemäß der Erfindung, wobei der Fräser in einer Seitenansicht dargestellt ist;

Figur 11 eine Draufsicht auf den Fräser gemäß der Figur 10;

Figur 12 eine geschnittene Seitenansicht des Fräsers gemäß der Figur 10 entsprechend der Schnittlinie A/A in Figur 10;

Figur 13 eine exponierte Detailansicht, ebenfalls in Schnittdarstellung gemäß der Figur 12;

Figur 14 eine weitere Ausführungsform gemäß der Erfindung, wobei hier der Fräser ebenfalls in der Seitenansicht dargestellt ist; und

Figur 15 eine weitere exponierte Darstellung in geschnittener Darstellung mit Halteelement.

### Bester Weg zur Ausführung der Erfindung

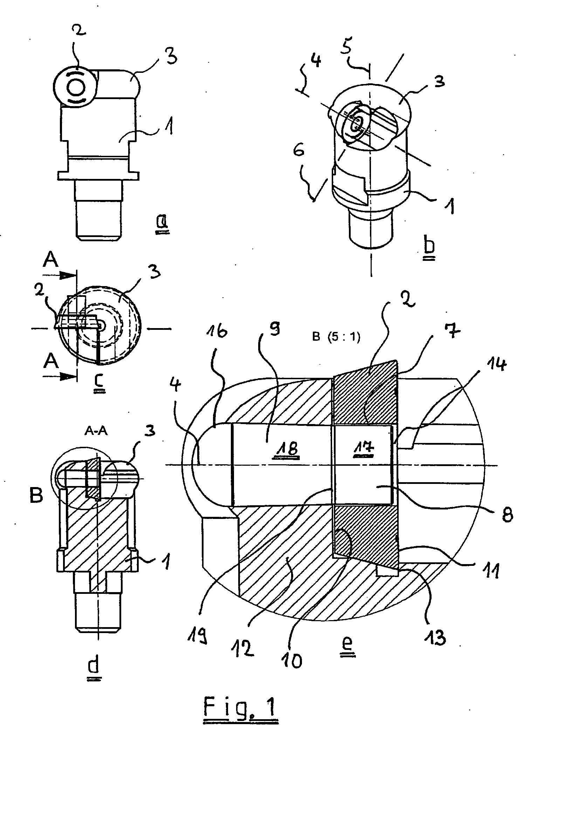

Die Figur 1 zeigt eine erste Ausführungsform eines erfindungsgemäßen Fräserwerkzeugs 1, wobei jeweils eine Detailansicht einmal in der Seitenansicht a, in der perspektivischen Ansicht b, in der Draufsicht c sowie in der geschnittenen exponierten Ansicht d das Fräswerkzeug 1 zu erkennen ist. In der Detailansicht e ist insbesondere die Anordnung einer Wendeschneidplatte 2 am Fräskopf 3 in der geschnittenen exponierten Darstellung gezeigt. Das Fräserwerkzeug 1 ist dabei zum spanabhebenden Bearbeiten von Werkstücken bestimmt, wobei am Fräskopf 3 des Fräswerkzeugs 1 wenigstens eine radial angeordnete Wendeschneidplatte 2 vorgesehen ist, die auf einer rotationssymmetrischen ausgebildeten Y-Achse 4 am Fräskopf 2 drehbar gelagert ist. Wie insbesondere aus der perspektivischen Darstellung der Figur 1b zu erkennen ist, bildet insbesondere die Z-Achse die Drehachse 5 des Fräswerkzeugs 1, wobei die X-Achse den Schneidhorizont einnimmt, der mit dem Bezugszeichen 6 bezeichnet ist.

Es versteht sich nun von selbst, dass die Y-Achse 4 rotationssymmetrisch am Fräskopf 3 vorgesehen ist, wobei diese versetzt zur Drehachse 5 verläuft. Wie insbesondere aus der Zusammenschau der Figuren 1c, d und e zu erkennen ist, ist die Wendeschneidplatte 2 unter einem Toleranzspiel 7 frei drehbar auf dem freien Ende 8 eines am Fräskopf 2 unter Spannsitz lösbar befestigten Lagerstiftes 9 angeordnet. Die frei drehbar gelagerte Wendeschneidplatte 2 ist hierbei gegen ein Selbstlösen vom Lagerstift 9 derart gesichert, dass sie von dem Material des Fräskopfes 2 einerseits, von der Rückseite 10 her flächig und andererseits von der Vorderseite11 her bereichsweise eingefasst bzw. umgeben ist. Dies ist insbesondere einmal aus der Ansicht der Figur 1 a zu erkennen, wobei deutlich wird, dass ein Bereich der Vorderseite 11 der Wendeschneidplatte 2 von dem Material 12 des Fräskopfes 3 überdeckt ist. Entsprechendes ist auch in der geschnittenen Ansicht der Figur 1e zu erkennen, wo insbesondere der untere Ansatz 13 des Fräskopfmaterials 12 die Vorderseite 11 der Wendeschneidplatte 2 übergreift.

Somit wird deutlich, unter Betrachtung der Figur 1e, dass die Wendeschneidplatte 2 wie in einem Zwangskäfig gehalten wird, wobei dieser bestimmt wird, einmal durch das freie Ende 8 des Lagerstiftes 9, der in die Zentralbohrung 14 der Wendescheidplatte 2 greift, sowie durch die vom Fräsermaterial 12 bestimmte Formgebung, die die drehbar gelagerte Wendeschneidplatte 2 von der Vorderseite 11 übergreift, in Verbindung mit der rückseitigen Anlage 15.

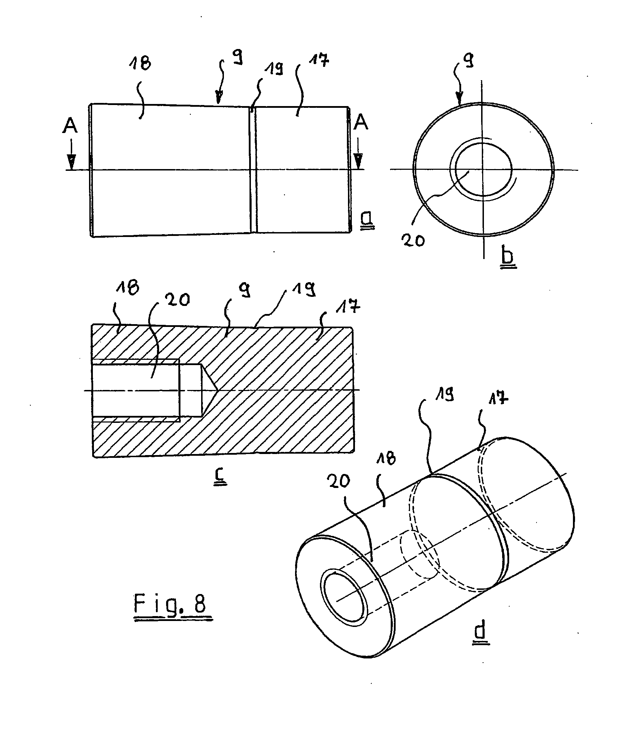

Wie aus der Detailansicht der Figur 1e zu erkennen ist, ist der Lagerstift 9 in einer am Fräskopf 2 durchschlägigen Bohrung 16 angeordnet. Der Lagerstift 9 als solches, so wie er sich in der Figur 1e und in den Einzelansichten der Figur 8a bis d darstellt, weist einen vorderen zylindrisch geformten Bereich 17 auf, der zur Drehlagerung der Wendeschneidplatte 2 bestimmt ist. Dieser zylindrische Bereich 17 hält somit für die Wendeschneidplatte 2 eine Art Gleitlagerung bereit, an der die Wendeschneidplatte 2 frei drehbar gelagert ist. Im hinteren Bereich weist der Lagerstift 9 einen konisch ausgebildeten Bereich 18 zur Festlegung im Fräskopfmaterial 12 des Fräskopfes 3 auf. Der Lagerstift 9 kann dabei im hinteren konisch ausgebildeten Bereich 18 mit einer in der durchschlägigen Bohrung 16 vorgesehenen Konizität zusammenwirken, so dass aufgrund der Formschlussverbindung der Lagerstift 9 ausschließlich durch Adhäsionskraft eine Starrachse für die Wendeschneidplatte 2 bildet. Dabei kann insbesondere im Übergangsbereich von dem konischen zum zylindrischen Bereich am Lagerstift 9 beispielsweise eine umlaufende Fasung 19 vorgesehen sein.

Es versteht sich nun von selbst, dass, wenn die Wendeschneidplatte 2, so wie sie in der Figur 1a bis 1e dargestellt ist, vom Fräskopf 2 entfernt werden soll, der Lagerstift 9 durch einfaches Herausschlagen bzw. Herausdrücken gegen die Konizität heraus getrieben werden kann, so dass der Lagerstift 9 den zylindrischen Bereich 17 in der Zentralbohrung 14 der Wendeschneidplatte 2 freigibt, und die Wendeschneidplatte 2 aus ihrem vom Fräsmaterial 12 gebildeten Käfig herausgenommen werden kann. Soll eine neue Wendeschneidplatte 2 wieder eingesetzt werden, so kann in den Freiraum des Käfigs die Wendeschneidplatte 2 eingesetzt werden, wobei dann lediglich der Lagerstift 9 wieder in Richtung der Konizität einzuschlagen bzw. einzudrücken ist.

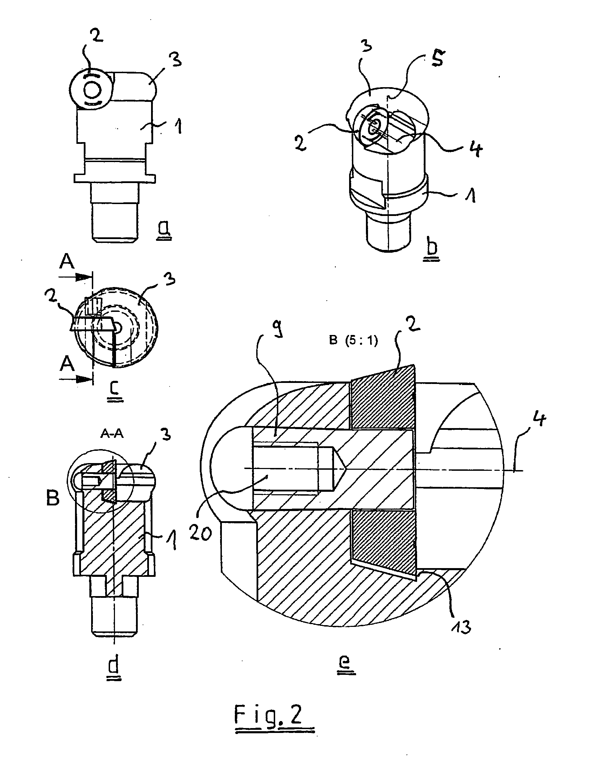

Die Ausführungsform gemäß der Figur 2a bis e unterscheidet sich lediglich dadurch, dass der Lagerstift 9 im hinteren konischen Bereich 18 eine Gewindebohrung 20 aufweist. Diese Gewindebohrung 20 kann insbesondere dazu genutzt werden, dass hier ein nicht näher dargestelltes Entnahmewerkzeug an dem Lagerstift 9 angesetzt werden kann. Denkbar ist auch, dass eine Klemmschraube bzw. eine Spannschraube in die Gewindebohrung 20 eingedreht werden kann, die den hinteren Bereich 18 des Lagerstiftes gegen die Wandung der durchschlägigen Bohrung 16 verspannt.

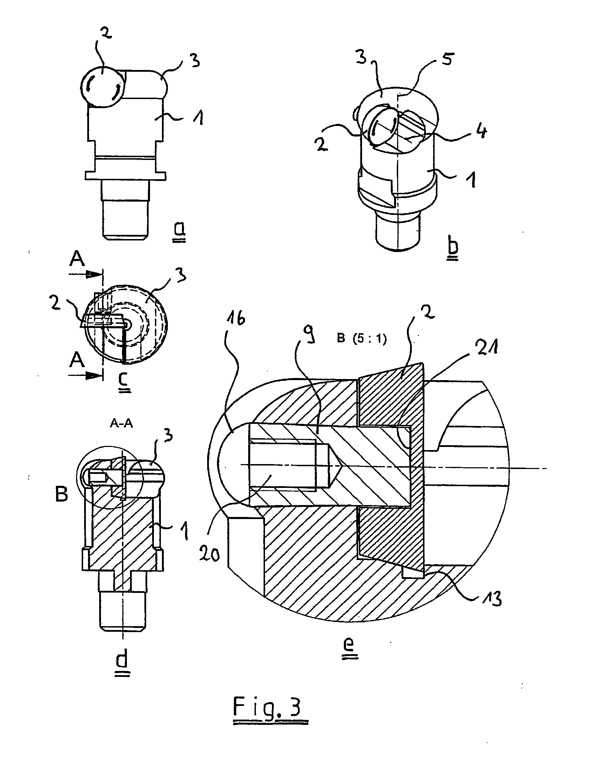

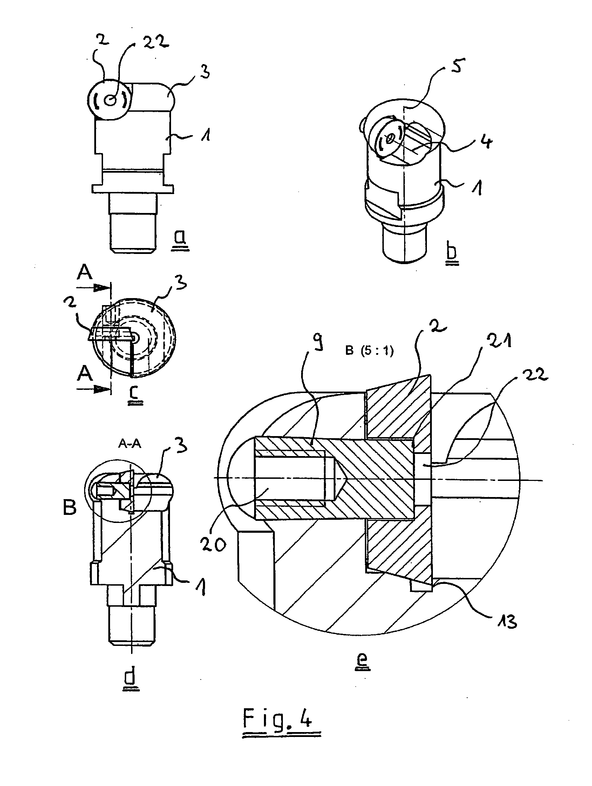

Die Figur 3a bis e zeigt eine Variante einer Wendeschneidplatte 2, wobei die Wendeschneidplatte 2 zur Drehlagerung eine zylindrische Sacklochbohrung 21 aufweist. Aufgrund dieser Ausbildung ergibt sich eine Wendeschneidplatte 2 mit einer geschlossenen Vorderseite 11, so wie dies beispielsweise in der Figur 3 a + b gezeigt wird. Eine Weiterbildung der Variante gemäß der Figur 3 zeigt die Figur 4, wobei die Sacklochbohrung 21 noch zusätzlich mit einer zentralen Öffnung 22 versehen ist, durch die, wie bereits schon zur Ausführungsform der Figur 1 beschrieben, ebenfalls ein Werkzeug angesetzt werden kann, um den Lagerstift 9 nach hinten herauszuschlagen.

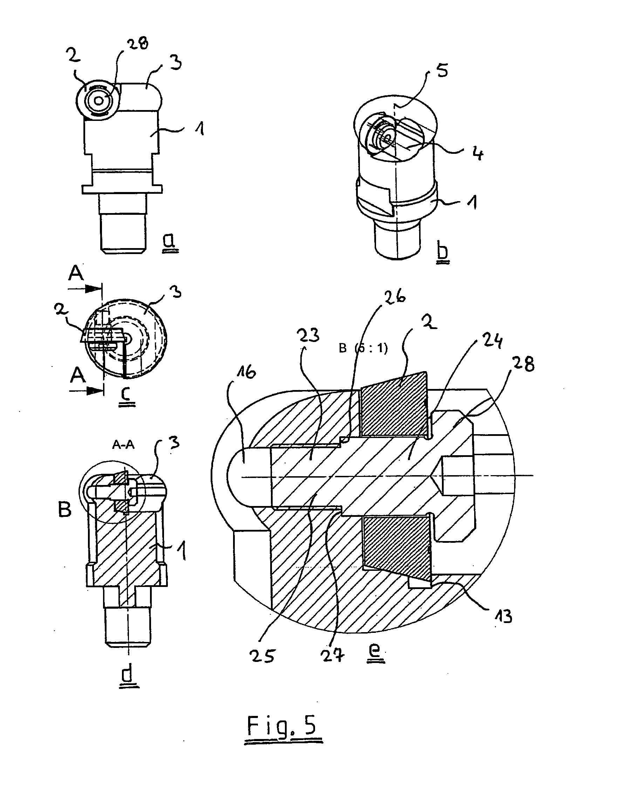

Als weitere mögliche Ausführungsform, dargestellt in der Figur 5a bis e, ist ein Fräskopf 3 dargestellt, bei dem der Lagerstift 9 als eine Schraube 23 ausgebildet ist. Dabei ist der vordere Bereich 24 des Schaftes der Schraube 23 zur Bildung der Lagerung der Wendeschneidplatte 2 ebenfalls zylindrisch geformt. Der zylindrische Bereich 24 greift dabei in die Bohrung 16, wobei der hintere Bereich 25 der Schraube 23 als Gewinde ausgebildet ist, so dass sich die Schraube 23 in die Bohrung 16 eindrehen lässt. Dabei presst sich ein Kragenrand 26 des zylindrischen vorderen Bereichs 24 gegen einen Anschlag 27 in der Bohrung 16 stützend an. Somit wird in gleicher Weise eine Starrachse für die drehbar gelagert Wendeschneidplatte 2 geschaffen. Wie aus der Figur 5e zu erkennen ist, ist hierbei der Schraubenkopf 28 derart ausgebildet, dass er die Wendeschneidplatte 2 übergreift. Denkbar ist aber auch, aufgrund der Käfigeinbindung, dass beispielsweise nicht eine Schraubenkopf-Lösung sondern eine Innensechskant-Lösung möglich ist, wobei dann der Schraubenkopf 28 fehlen würde.

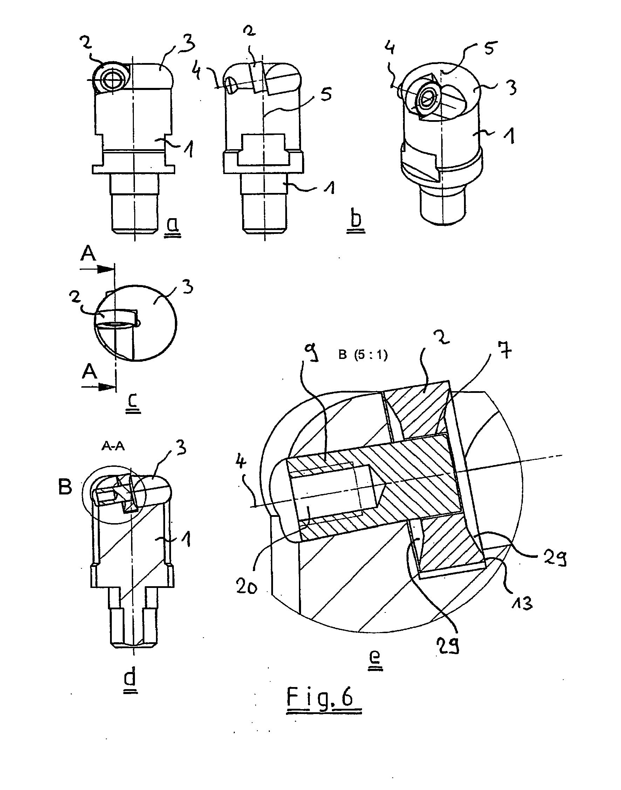

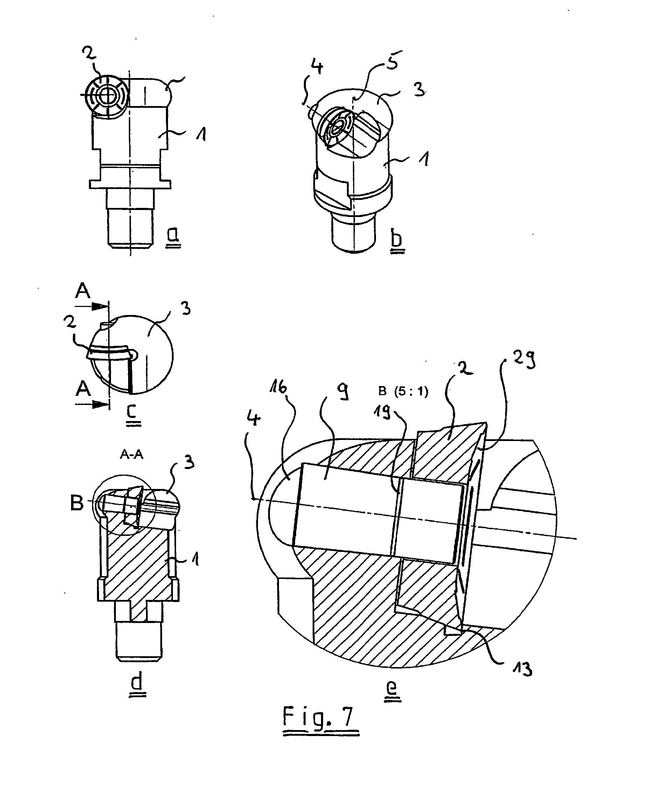

Die Figuren 6 und 7 zeigen jeweils zwei Ausführungsformen, wobei hierbei die rotationssymmetrisch ausgebildete Y-Achse 4 am Fräskopf 3 unter einer Schrägen verläuft. So zeigt beispielsweise die Figur 6a bis e die Ausführungsform, bei der die Schräge eine geringe Positivneigung gegenüber der X-Achse 6 aufweist und wobei die Figur 7a bis e eine geringe Negativneigung zur X-Achse 6 darstellt. Bei den dargestellten Wendeschneidplatten 2 gemäß der Figuren 6 und 7 ist anzuführen, dass die Wendeschneidplatte 2 gemäß der Figur 7 eine Spanmulde 29 aufweist, wobei die Figur 6 eine Wendeschneidplatte 2 zeigt, die an ihrer Frontseite und an ihrer Rückseite jeweils eine Spanmulde 29 hat.

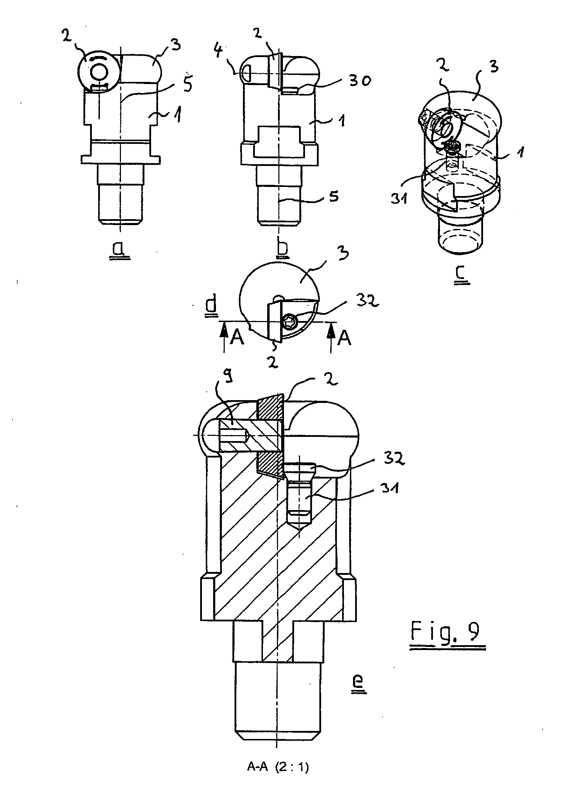

Nach einer besonders vorteilhaften Ausgestaltung der Erfindung, dargestellt in der Figur 9 kann statt des einfassenden Fräsermaterials 12 die Wendeschneidplatte 2 von ihrer Vorderseite 11 her mit einem Halteelement 30 zusammenwirken. Dabei ist die frei drehbar gelagerte Wendeschneidplatte 2 gegen das Selbstlösen vom Lagerstift 9 von dem Material 12 des Fräskopfes 3 von der Rückseite 10 her flächig und andererseits von der Vorderseite 11 her mittels eines am Fräskopf vorgesehenen Halteelementes 30 eingefasst. Das Halteelement 30 umfasst eine Schraube 31, dessen Schraubenkopf 32 eine frontseitige Anlage für die drehbar gelagerte Wendeschneidplatte 2 bildet.

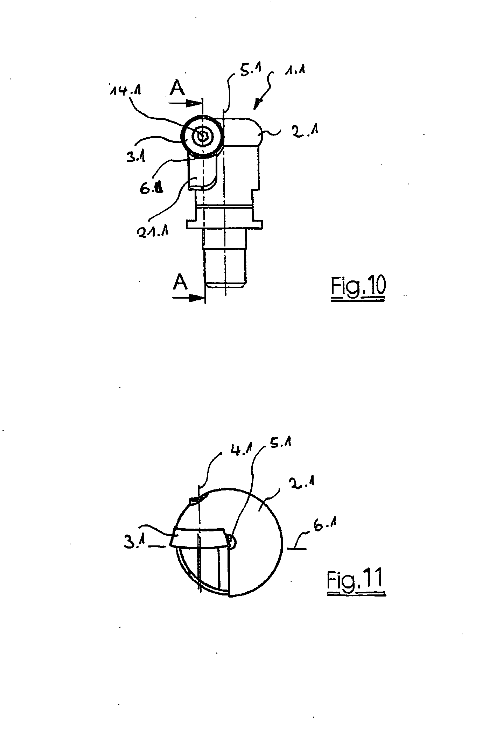

Die Figuren 10, 11, 12 und 13 zeigen eine weitere Ausführungsform eines Fräswerkzeuges 1.1 zum spanabhebenden Bearbeiten von Werkstücken mit wenigstens einer am Fräskopf 2.1 radial angeordneten Schneide 3.1 in Form einer Wendeschneidplatte, die auf einer rotationssymmetrisch ausgebildeten Y-Achse 4.1 am Fräskopf 2.1 drehbar gelagert ist.

Aus der Zusammenschau der Figuren 10 bis 13 bildet die Z-Achse die Drehachse 5.1 des Fräswerkzeuges 1.1, wobei die X-Achse den Schneidhorizont einnimmt, der mit dem Bezugszeichen 6.1 bezeichnet ist. Es versteht sich nun von selbst, dass die Y-Achse rotationssymmetrisch am Fräskopf 2.1 vorgesehen ist, wobei diese versetzt zur Drehachse 5.1 verläuft.

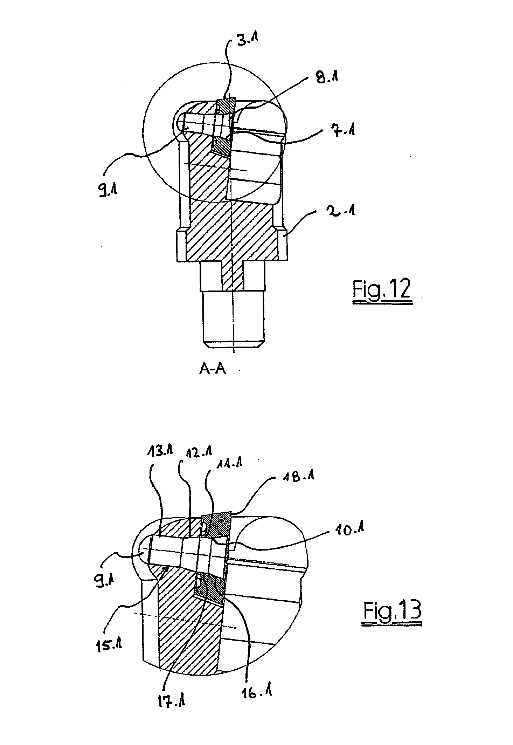

Wie aus der Zusammenschau der Figuren 10 bis 13 zu erkennen ist, ist die Wendeschneidplatte 3.1 unter einem Toleranzspiel 7.1 frei drehbar auf dem freien Ende 8.1 eines am Fräskopf 2.1 unter Spannsitz lösbar befestigten Lagerstiftes 9.1 angeordnet. Die frei drehbar gelagerte Wendeschneidplatte 3.1 ist hierbei gegen ein Selbstlösen vom Lagerstift 9.1 derart gesichert, wobei Wendeschneidplatte 3.1 und freies Ende 8.1 des Lagerstiftes durch Formschluss zwischen dem freien Ende 8.1 des Lagerstiftes 9.1 sowie dem Lagersitz 10.1 der Wendeschneidplatte 3.1 gesichert ist. Dies ist insbesondere deutlich in den Figuren 12 und 13 zu erkennen, wo insbesondere der Formschluss der Lagerstelle, hier in Form eines Gleitlagers, zu erkennen ist. Dabei ist der Formschluss zwischen dem freien Ende 8.1 des Lagerstiftes 9.1 sowie dem Lagersitz 10.1 der Wendeschneidplatte 3.1 konisch ausgebildet. Die konische Formschlussverbindung erstreckt sich vorzugsweise etwa über die Hälfte des freien Endes 8.1 des Lagerstiftes 9.1 bzw. des Lagersitzes 10.1 der Wendeschneidplatte 3.1.

Das freie Ende 8.1 des Lagerstiftes 9.1 weist einen zylindrischen Bereich 11.1 zur Drehlagerung der Wendeschneidplatte 3.1 auf, an den sich ein weiterer, konisch ausgebildeter Bereich 12.1 zur Feststellung sowie zur Zentrierung im Trägermaterial des Fräskopfes 2.1 anschließt. Wird also der Lagerstift 9.1 in das Material des Fräskopfes 2.1 eingedreht, so zieht sich insbesondere der konische Bereich 11.1 des Lagerstiftes 9.1 in die Konizität des Fräskopfmateriales, so dass das freie Ende 8.1 des Lagerstiftes 9.1 hier in seiner Rotationsachse in der Y-Achse 4.1 zentriert wird.

Wie aus den Figuren 12 und 13 zu erkennen ist, ist der Lagerstift 9.1 im hinteren Bereich 13.1 als eine Schraube ausgebildet, zur spannenden Festlegung im Trägermaterial des Fräskopfes 2.1. Zur Festlegung des Lagerstiftes 9.1 kann hierbei beispielsweise ein Innensechskant 14.1 an der vorderen Stirnseite des Lagerstiftes 9.1 vorhanden sein, wie er beispielsweise in der Figur 10 zu erkennen ist. Bei einer durchschlägigen Bohrung 15.1 im Fräskopfmaterial kann auch beispielsweise ein Innensechskant am hinteren Ende des Lagerstiftes 9.1 vorgesehen sein, so dass der Lagerstift 9.1 von hinten her aus dem Fräskopfmaterial gelöst werden kann um auf diese Weise die Wendeschneidplatte 3.1 zu lösen und zu entfernen.

Zur Bereitstellung der Formschlussverbindung weist die Wendeschneidplatte 3.1 zur Drehlagerung ebenfalls eine konische Bohrung 16.1 auf, an die sich ein entsprechend zylindrischer Bereich 17.1 anschließt. Gemäß einer vorteilhaften Weiterbildung weist hierbei die Wendeschneidplatte 3.1 an ihrer Vorderseite eine Spanmulde 18.1 auf, so dass ein kontrollierter Span durch die rotierende Wendeschneidplatte 3.1 abgetragen werden kann.

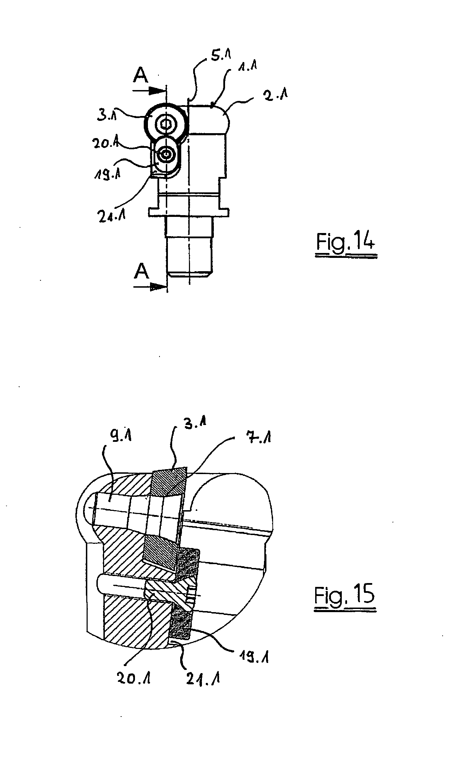

Gemäß einer besonderen Ausführungsform der Erfindung, dargestellt in den Figuren 14 und 15, ist zusätzlich an der Vorderseite der Wendeschneidplatte 3.1 ein Halteelement 19.1 vorgesehen, welches insbesondere die Vorderseite der Wendeschneidplatte 3.1 bereichsweise einfasst. Dabei wird im unteren Bereich der Wendeschneidplatte 3.1 ein Käfig gebildet, in dem die frei rotierende Wendeschneidplatte 3.1 eingefasst ist. Das Halteelement 19.1 umfasst eine Platte, die mittels eines Befestigungsmittels 20.1, vorzugsweise einer Schraube, am Fräskopf 2.1 befestigt ist. Die Platte kann hierbei vorzugsweise in einer am Fräskopf 2.1 vorgesehenen Ausformung 21.1, beispielsweise wie sie in der Figur 10 dargestellt ist, liegen oder angeordnet sein. Wie aus dem Ausführungsbeispiel der Figuren 14 und 15 zu erkennen ist, ist das Halteelement 19 hier als abgerundete Platte an den Stirnseiten ausgebildet, die mittels des Befestigungsmittels 20.1, vorzugsweise einer Schraube, festgelegt ist. Das plattenförmige Element übergreift bereichsweise die Ausformung 21.1, so dass sie in einem Bereich die Wendeschneidplatte 3.1 übergreift. Dadurch wird eine zusätzliche Sicherung der Wendeschneidplatte 3.1 erreicht, so dass ein Selbstlösevorgang dadurch unterbunden wird.

### Bezugszeichenliste

- 01: Fräswerkzeug
- 02: Wendeschneidplatte
- 03: Fräskopf
- 04: Y-Achse
- 05: Z-Achse
- 06: X-Achse
- 07: Tolleranzspiel
- 08: Freies Ende
- 09: Lagerstift
- 10: Rückseite Wendeschneidplatte
- 11: Vorderseite Wendeschneidplatte
- 12: Material Fräskopf
- 13: Untere Ansatz
- 14: Zentralbohrung Wendeschneidplatte
- 15: Rückseitige Anlage für Wendeschneidplatte
- 16: Durchschlägige Bohrung
- 17: Zylindrischer Bereich
- 18: Konischer Bereich
- 19: Fasung
- 20: Gewindebohrung
- 21: Sacklochbohrung
- 22: Zentrale Öffnung
- 23: Schraube
- 24: Vordere Bereich
- 25: Hintere Bereich
- 26: Kragenrand
- 27: Anschlag
- 28: Schraubenkopf
- 29: Spanmulde
- 30: Halteelement
- 31: Schraube
- 32: Schraubenkopf
- 1.1: Fräswerkzeug
- 2.1: Fräskopf
- 3.1: Wendeschneidplatte
- 4.1: Y-Achse Rotationsachse Wendeschneidplatte
- 5.1: Z-Achse Drehachse
- 6.1: X-Achse Schneidhorizont
- 7.1: Toleranzspiel
- 8.1: Freies Ende
- 9.1: Lagerstift
- 10.1: Lagersitz
- 11.1: Zylindrischer Bereich
- 12.1: Konischer Bereich
- 13.1: Hintere Bereich
- 14.1: Innensechkant
- 15.1: Bohrung
- 16.1: Konische Bohrung
- 17.1: Zylindrische Bohrung
- 18.1: Spanmulde
- 19.1: Halteelement
- 20.1: Befestigungsmittel, vorzugsweise eine Schraube
- 21.1: Ausformung

## Patentansprüche

1. Fräswerkzeug (1) zum spanabhebenden Bearbeiten von Werkstücken mit wenigstens einer am Fräskopf (3) radial angeordneten Schneide in Form einer Wendeschneidplatte (2), die auf einer rotationssymmetrisch ausgebildeten Y-Achse (4) am Fräskopf (3) drehbar gelagert ist, und wobei die Wendeschneidplatte (2) unter einem Tolenwzspiel (7) frei drehbar an einem am Fräskopf (3) eingefassten Lagerstift (9) angeordnet ist wobei die frei drehbar gelagerte Wendeschneidplatte (2) gegen ein Selbstlösen vom Lagerstift (9) von dem Material (12) des Fräskopfes (3) einerseits von der Rückseite (10) her flächig und andererseits von der Vorderseite (11) her bereichsweise eingefasst bzw. umgeben ist ,
**dadurch gekennzeichnet,**
**dass** der Lagerstift (9) einen vorderen zylindrischen Bereich (17) zur Drehlagerung der Wendeschneidplatte (2) und einen hinteren konisch ausgebildeten Bereich (18) zur Festlegung im Trägermaterial (12) des Fräskopfes (3) aufweist, wobei der hintere Bereich (18) unter einem Spannsitz lösbar in einer am Fräskopf (1) durchschlägigen Bohrung (16) angeordnet ist, und der ein freies Ende (8) bildende vordere Bereich (17) des Lagerstiftes (9) eine Gleitlagerung für die Wendeschneidplatte (2) bildet

2. Fräswerkzeug nach Anspruch 1, **dadurch gekennzeichnet, dass** der Lagerstift (9) im hinteren konisch ausgebildeten Bereich (18) eine zentrale Gewindebohrung (20) aufweist.

3. Fräswerkzeug nach Anspruch 2, **dadurch gekennzeichnet, dass** der Lagerstift (9) im hinteren konisch ausgebildeten Bereich (18) mit einer in der Bohrung (16) vorgesehenen Konizität zusammenwirkt.

4. Fräswerkzeug nach Anspruch 1 bis 3, **dadurch gekennzeichnet, dass** der Lagerstift (9) als eine Schraube (23) ausgebildet ist, dessen vorderer Bereich (24) des Schafts zur Bildung der Lagerung der Wendeschneidplatte (2) zylindrisch ist und wobei der zylindrische Bereich (24) in die Bohrung (20) greift und abgestützt ist.

5. Fräswerkzeug nach Anspruch 4, **dadurch gekennzeichnet, dass** die Wendeschneidplatte (2) zur Drehlagerung eine zylindrische Sacklochbohrung (21) aufweist.

6. Fräswerkzeug nach Anspruch 5, **dadurch gekennzeichnet, dass** die Wendeschneidplatte (2) zur Drehlagerung eine zylindrische Sacklochbohrung (21) mit einer zentralen Öffnung (22) aufweist.

7. Fräswerkzeug nach Anspruch 6, **dadurch gekennzeichnet, dass** die Wendeschneidplatte (2) an ihrer Vorderseite (11) eine Spanmulde (29) aufweist.

8. Fräswerkzeug nach Anspruch 7, **dadurch gekennzeichnet, dass** die Wendeschneidplatte (2) an ihrer Vorderseite (11) und an ihrer Rückseite (10) jeweils eine Spanmulde (29) aufweist.

9. Fräswerkzeug nach einem oder mehreren der vorhergehenden Ansprüche 1 bis 8, **dadurch gekennzeichnet, dass** die frei drehbar gelagerte Wendeschneidplatte (2) gegen ein Selbstlösen vom Lagerstift (9) von dem Material (12) des Fräskopfes (3) von der Rückseite (10) her flächig und andererseits von der Vorderseite (11) her mittels eines am Fräskopf vorgesehenen Halteelementes (30) eingefasst ist.

10. Fräswerkzeug nach Anspruch 09, **dadurch gekennzeichnet, dass** das Halteelement (30) eine Schraube (31) umfasst, dessen Schraubenkopf (32) eine frontseitige Anlage für die drehbar gelagerte Wendeschneidplatte (2) bildet.

11. Fräswerkzeug nach Anspruch 1, **dadurch gekennzeichnet, dass** die Wendeschneidplatte (3.1) unter einem Toleranzspiel (7.1) frei drehbar auf dem freien Ende (8.1) eines am Fräskopf (2.1) unter Spannsitz lösbar befestigten Lagerstiftes (9.1) angeordnet ist und wobei die frei drehbar gelagerte Wendeschneidplatte (3.1) gegen ein Selbstlösen vom Lagerstift (9.1) durch Formschluss zwischen dem freien Ende (8.1) des Lagerstiftes (9.1) sowie dem Lagersitz (10.1) der Wendeschneidplatte (3.1) gesichert ist.

12. Fräswerkzeug nach Anspruch 11, **dadurch gekennzeichnet, dass** der Formschluss zwischen dem freien Ende (8.1) des Lagerstiftes (9.1) sowie dem Lagersitz (10.1) der Wendeschneidplatte (3.1) konisch ausgebildet ist.

13. Fräswerkzeug nach Anspruch 12, **dadurch gekennzeichnet, dass** die konische Formschlussverbindung sich vorzugsweise etwa über die Hälfte des freien Endes (8.1) des Lagestiftes (9.1) bzw. des Lagersitzes (10.1) der Wendeschneidpatte (3.1) erstreckt.

14. Fräswerkzeug nach Anspruch 13, **dadurch gekennzeichnet, dass** der Lagerstift (9.1) im hinteren Bereich (13.1) als eine Schraube ausgebildet ist, zur spannenden Festlegung im Trägermaterial des Fräskopfes (2.1).

15. Fräswerkzeug nach einem oder mehreren der vorhergehenden Ansprüche 1 bis 14, **dadurch gekennzeichnet, dass** die frei drehbar gelagerte Wendeschneidplatte von der Vorderseite her mittels eines am Fräskopf (2.1) vorgesehenen Halteelementes (19.1) eingefasst ist.

## Claims

1. A milling tool (1) for machining work pieces, having at least one cutting edge in the form of an indexable insert (2) radially arranged on the milling head (3), which is rotatably mounted on the milling head (3) on a rotation-symmetrically embodied Y-axis (4), and wherein the indexable insert (2) subject to tolerance play (7) is arranged freely rotatably on a bearing pin (9) encased on the milling head (3), wherein the indexable insert (2) mounted freely rotatably is encased or surrounded by the material (12) of the milling head (3) areally from the back (10) and on the other hand from the front (11) in regions to prevent the bearing pin (9)coming loose,
**characterized in that**
the bearing (9) has a front cylindrical region (17) for the rotary mounting of the indexable insert (2) and a rear conically formed region (18) for fixing in the carrier material (12) of the milling head (3), wherein the rear region (18) is arranged releasably under a clamping seat in a throughbore (16) on the milling head (3), and the front region (17) of the bearing pin (9) forming a free end (8) forms a slide mounting for the indexable insert (2).

2. The milling tool according to Claim 1, **characterized in that** the bearing pin (9) in the rear conically formed region (18) comprises a central threaded bore (20).

3. The milling tool according to Claim 2, **characterized in that** the bearing pin (9) in the rear conically formed region (18) interacts with a conicity provided in the bore (16).

4. The milling tool according to Claim 1 to 3, **characterized in that** the bearing pin (9) is formed as a screw (23), whose front region (24) of the shank is cylindrical for forming the mounting of the indexable insert (2) and wherein the cylindrical region (24) engages in the bore (20) and is supported.

5. The milling tool according to Claim 4, **characterized in that** the indexable insert (2) for the rotary mounting comprises a cylindrical blind hole bore (21).

6. The milling tool according to Claim 5, **characterized in that** the indexable insert (2) for the rotary mounting comprises a cylindrical blind hole bore (21) with a central opening (22).

7. The milling tool according to Claim 6, **characterized in that** the indexable insert (2) at its front (11) comprises a chip trough (29).

8. The milling tool according to Claim 7, **characterized in that** the indexable insert (2) at its front (11) and at its back (10) comprises a chip trough (29) each.

9. The milling tool according to any one or a plurality of the preceding Claims 1 to 8, **characterized in that** the indexable insert (2) that is mounted freely rotatably is encased by the material (12) of the milling head (3) areally from the back (10) and on the other hand from the front (11) by means of a holding element (30) provided on the milling head to prevent it coming loose from the bearing pin (9).

10. The milling tool according to Claim 09, **characterized in that** the holding element (30) comprises a screw (31) whose screw head (32) forms a front bearing for the rotatably mounted indexable insert (2).

11. The milling tool according to Claim 1, **characterized in that** the indexable insert (3.1) subject to a tolerance plate (7.1) is arranged freely rotatably on the free end (8.1) of a bearing pin (9.1) releasably fastened to the milling head (2.1) subject to a clamping seat and wherein the indexable insert (3.1) that is mounted in a freely rotatable manner is secured to prevent it coming loose from the bearing pin (9.1) through positive connection between the free end (8.1) of the bearing pin (9.1) and the bearing seat (10.1) of the indexable insert (3.1).

12. The milling tool according to Claim 11, **characterized in that** the positive connection between the free end (8.1) of the bearing pin (9.1) and the bearing seat (10.1) of the indexable insert (3.1) is conically formed.

13. The milling tool according to Claim 12, **characterized in that** the conical positive connection preferentially extends approximately over half of the free end (8.1) of the bearing pin (9.1) or of the bearing seat (10.1) of the indexable insert (3.1).

14. The milling tool according to Claim 13, **characterized in that** the bearing pin (9.1) in the rear region (13.1) is formed as a screw for the clamping fixing in the carrier material of the milling head (2.1).

15. The milling tool according to any one or a plurality of the preceding Claims 1 to 14, **characterized in that** the indexable insert mounted in a freely rotatable manner is encased from the front by means of a holding element (19.1) provided on the milling head (2.1).

## Revendications

1. Outil de fraisage (1) pour l'usinage de pièces par enlèvement de copeaux comprenant au moins une lame disposée radialement sur la tête de fraisage (3), ayant la forme d'une plaque de coupe amovible (2) positionnée de manière rotative sur un axe Y (4) formé en symétrie de rotation sur la tête de fraisage (3), et dans lequel la plaque de coupe amovible (2) est disposée de manière à tourner librement dans un jeu de tolérances (7) sur un ergot d'entraînement (9) enchâssé sur la tête de fraisage (3), sachant que la plaque de coupe amovible (2) disposée de manière à tourner librement est enchâssée respectivement entourée par tronçons de manière plane depuis la face arrière (10) d'une part et depuis la face avant (11) d'autre part, contre une séparation de l'ergot d'entraînement (9) du matériau (12) de la tête de fraisage (3),
**caractérisé en ce que**
l'ergot d'entraînement (9) présente une partie avant cylindrique (17) pour l'appui en rotation de la plaque de coupe amovible (2) et une partie arrière conique (18) pour s'établir dans le matériau de, support (12) de la tête de fraisage (3), sachant que la partie arrière (18) est disposée de manière séparable sous un siège de serrage, dans un alésage (16) traversant sur la tête de fraisage (3), et la partie avant (17) de l'ergot d'entraînement (9) formant une extrémité (8) libre, forme un palier de glissement pour la plaque de coupe amovible (2).

2. Outil de fraisage selon la revendication 1, **caractérisé en ce que** l'ergot d'entraînement (9) présente un alésage fileté central (20) dans la partie arrière conique (18).

3. Outil de fraisage selon la revendication 2, **caractérisé en ce que** l'ergot d'entraînement (9) coopère dans la partie arrière conique (18) avec une conicité prévue dans l'alésage (16).

4. Outil de fraisage selon la revendication 1 à 3, **caractérisé en ce que** l'ergot d'entraînement (9) est formé en tant qu'une vis (23) dont la partie avant (24) de la tige est cylindrique pour former l'appui de la plaque de coupe amovible (2) et sachant que la partie cylindrique (24) se met en prise dans l'alésage (20) et y est soutenue.

5. Outil de fraisage selon la revendication 4, **caractérisé en ce que** la plaque de coupe amovible (2) présente un alésage à fond borgne cylindrique (21) pour l'appui en rotation.

6. Outil de fraisage selon la revendication 5, **caractérisé en ce que** la plaque de coupe amovible (2) présente un alésage à fond borgne cylindrique (21) avec une ouverture centrale (22) pour l'appui en rotation.

7. Outil de fraisage selon la revendication 6, **caractérisé en ce que** la plaque de coupe amovible (2) présente une poche à copeaux (29) sur sa face avant (11).

8. Outil de fraisage selon la revendication 7, **caractérisé en ce que** la plaque de coupe amovible (2) présente une poche à copeaux (29) respectivement sur sa face avant (11) et sur sa face arrière (10).

9. Outil de fraisage selon l'une ou plusieurs des revendications précédentes 1 à 8, **caractérisé en ce que** la plaque de coupe amovible (2) disposée de manière à tourner librement est enchâssé respectivement entourée par tronçons de manière plane depuis la face arrière (10) d'une part et depuis la face avant (11) d'autre part, contre une séparation de l'ergot d'entraînement (9) du matériau (12) de la tête de fraisage (3), par un élément de fixation (30) prévu sur la tête de fraisage.

10. Outil de fraisage selon la revendication 9, **caractérisé en ce que** l'élément de fixation (30) comprend une vis (31) dont la tête de vis (32) forme un appui frontal pour la plaque de coupe amovible (2) disposée de manière à tourner librement.

11. Outil de fraisage selon la revendication 1, **caractérisé en ce que** la plaque de coupe amovible (3.1) est disposée de manière à tourner librement, dans un jeu de tolérances (7.1), sur l'extrémité libre (8.1) d'un ergot d'entraînement (9.1) disposé de manière séparable sous un siège de serrage sur la tête de fraisage (2.1) et sachant que la plaque de coupe amovible (3.1) disposée de manière à tourner librement est fixée par complémentarité de formes entre l'extrémité libre (8.1) de l'ergot d'entraînement (9.1) et le siège d'appui (10.1) de la plaque de coupe amovible (3.1), contre une séparation de l'ergot d'entraînement (9.1).

12. Outil de fraisage selon la revendication 11, **caractérisé en ce que** la complémentarité de formes entre l'extrémité libre (8.1) de l'ergot d'entraînement (9.1) et le siège d'appui (10.1) de la plaque de coupe amovible (3.1) est conique.

13. Outil de fraisage selon la revendication 12, **caractérisé en ce que** la liaison par complémentarité de formes conique s'étend de préférence environ au-dessus de la moitié de l'extrémité libre (8.1) de l'ergot d'entraînement (9.1) respectivement du siège d'appui (10.1) de la plaque de coupe amovible (3.1)

14. Outil de fraisage selon la revendication 13, **caractérisé en ce que** l'ergot d'entraînement (9.1) dans la partie arrière (13.1) est formé en tant qu'une vis pour s'établir par serrage dans le matériau de support de la tête de fraisage (2.1).

15. Outil de fraisage selon l'une ou plusieurs des revendications précédentes 1 à 14, **caractérisé en ce que** la plaque de coupe amovible disposée de manière à tourner librement est enchâssée depuis la face avant via un élément de fixation (19.1) prévu sur la tête de fraisage (2.1).
